# EUROPÄISCHE PATENTSCHRIFT

(11) **EP 0 193 235 B1**
(45) Veröffentlichungstag und Bekanntmachung des Hinweises auf die Patenterteilung: **13.01.1993**
(21) Anmeldenummer: 86200243.3
(22) Anmeldetag: 19.02.1986
(51) Int. Cl.: G06F 15/336, H04N 5/08

(54) **Korrelator**
Correlator
Corrélateur

(30) Priorität: 23.02.1985 DE 3506449
(43) Veröffentlichungstag der Anmeldung: 03.09.1986
(73) Patentinhaber: Philips Patentverwaltung GmbH, 22335 Hamburg (DE); Philips Electronics N.V., 5621 BA Eindhoven (NL)
(72) Erfinder: Habeck, Alwin, D-2082 Uetersen (DE); Demmer, Walter, D-2000 Hamburg 54 (DE); Ruprecht, Jürgen, D-2000 Oststeinbek (DE); Oldach, Detlef, D-2102 Hamburg 93 (DE)
(74) Vertreter: Hartmann, Heinrich, Dipl.-Ing.

(56) Entgegenhaltungen:
- US-A- 4 143 396
- US-A- 4 550 342

## Beschreibung

Die Erfindung betrifft einen Korrelator mit einer Kette von mindestens zwei Verzögerungsgliedern, deren erstem Verzögerungsglied ein Eingangssignal zugeführt wird, das in periodischen Abständen Impulse enthält und als Folge digitaler Abtastwerte vorliegt, und mit einer Kombinationsschaltung zum linearen Kombinieren des Eingangssignals des ersten Verzögerungsgliedes und der Ausgangssignale aller Verzögerungsglieder und zum Erzeugen eines bei einem Impuls einen Extremwert annehmenden Korrelatorausgangssignals. Ein solcher Korrelator kann z.B. in einem Fernsehempfangsgerät dazu verwendet werden, in dem vom Rauschen überlagerten FBAS-Signal (Fernsehsignal) die Synchronimpulse zu entdecken.

Mit einem Korrelator wird die Korrelationsfunktion zwischen einem Eingangssignal und einem vorhandenen Mustersignal gebildet. Die Korrelationsfunktion gibt eine Aussage über die Ähnlichkeit von zwei Signalen. So kann z.B. ein periodisches impulsförmiges Signal, dessen Verlauf qualitativ bekannt ist, das aber von Rauschen überlagert ist und deshalb nicht erkannt wird, vom Korrelator detektiert werden. Das Ausgangssignal des Korrelators, die Korrelationsfunktion, nimmt bei einem Impuls einen Extremwert an, so daß sich der Zeitpunkt des Auftretens der Impulse bestimmen läßt.

Aus dem Buch von Eugen Philippow, Taschenbuch Elektrotechnik, Band 2, 1. Auflage 1977, Seite 171, ist ein Korrelator bekannt, der aus einer Kette von Verzögerungsgliedern besteht, deren erstem Verzögerungsglied das impulsförmige Eingangssignal zugeführt wird und die jeweils einen Abtastwert speichern. Das Eingangssignal und die Ausgangssignale der Verzögerungsglieder werden jeweils über Phasendreherschaltungen, die die einzelnen Signale eventuell invertieren, einer Kombinationsschaltung (Summationsstufe) zugeführt. Die zur Bildung der Korrelationsfunktion notwendige Multiplikation des impulsförmigen Mustersignals mit dem Eingangssignal wird durch die Phasendreherschaltungen realisiert. In der Kombinationsschaltung wird durch Linearkombination (Summation) die mit einer Konstante multiplizierte Korrelationsfunktion gebildet.

Der Erfindung liegt die Aufgabe zugrunde, einen Korrelator der eingangs genannten Art zu vereinfachen und damit den Schaltungsaufwand zu verringern.

Diese Aufgabe wird erfindungsgemäß dadurch gelöst, daß jedes Verzögerungsglied einem Impuls bzw. impulsfreien Zeitabschnitt zugeordnet ist, daß die Verzögerungsglieder in gleicher Weise aufeinanderfolgen, wie die Impulse bzw. impulsfreien Zeitabschnitte auftreten, daß alle bis auf höchstens ein am Anfang oder Ende der Kette liegendes Verzögerungsglied zum Aufnehmen gerade aller Abtastwerte des zugeordneten Impulses bzw. impulsfreien Zeitabschnittes geeignet sind, und daß die Kombinationsschaltung zusätzlich mindestens einen Integrator enthält zum Integrieren des linearkombinierten Signals.

Bei dem erfindungsgemäßen Korrelator folgt auf ein einem Impuls zugeordnetes Verzögerungsglied ein einem impulsfreien Zeitabschnitt zugeordnetes Verzögerungsglied. Die Kette kann also so viele Verzögerungsglieder enthalten, wie Impulse bzw. impulsfreie Zeitabschnitte während einer Gesamtverzögerungszeit vorhanden sind. Die Gesamtverzögerungszeit sollte vorteilhafterweise gleich einer Signalperiode sein. Es besteht die Möglichkeit entweder das erste Verzögerungsglied der Kette oder das letzte so auszugestalten, daß die Verzögerungszeit sich von der Dauer eines Impulses bzw. impulsfreien Zeitabschnittes unterscheidet. Alle anderen Verzögerungsglieder werden um die Anzahl der Takte verzögert, die der Anzahl der Abtastwerte des jeweiligen Impulses bzw. impulsfreien Zeitabschnittes entspricht. Weiter ist es nicht notwendig, daß die Anzahl der Verzögerungsglieder gleich der Anzahl der Impulse bzw. impulsfreien Zeitabschnitte ist, wenn mehr als zwei Impulse bzw. impulsfreie Zeitabschnitte vorhanden sind. Es braucht z.B. der letzte impulsfreie Zeitabschnitt einer Periode nicht durch ein Verzögerungsglied berücksichtigt werden oder es kann z.B. ein kurzer auftretender Impuls unberücksichtigt bleiben, d.h. der Zeitabschnitt dieses Impulses wird als Teil eines impulsfreien Zeitabschnittes interpretiert, der sich aus dem Zeitabschnitt des kurzen Impulses und den impulsfreien Zeitabschnitten vor und nach dem kurzen Impuls zusammensetzt.

In der Kombinationsschaltung wird die Linearkombination und Integration so ausgeführt, daß die jeweiligen Eingangssignale vom Ausgangssignal der Verzögerungsglieder subtrahiert werden und jedes zweite Differenzergebnis invertiert wird und diese invertierten Differenzergebnisse und die nichtinvertierten Differenzergebnisse summiert und integriert werden. Die Multiplikation des Eingangssignals mit dem Mustersignal wird durch die Inversion bzw. Nichtinversion der Differenzergebnisse realisiert. Der Extremwert des Korrelatorausgangssignals zeigt an, wann ein Impuls vorgelegen hat.

In einer ersten Weiterbildung der Erfindung ist vorgesehen, daß in der Kombinationsschaltung erste Überlagerungsschaltungen angeordnet sind, die je einem der Verzögerungsglieder zugeordnet sind zum jeweils Bilden der Differenz des Eingangssignals des zugeordneten Verzögerungsgliedes und des Ausgangssignals dieses Verzögerungsgliedes, und eine zweite Überlagerungsschaltung vorgesehen ist zum Bilden der Summe der Ausgangssignale der ersten Überlagerungsschaltungen, die jedem zweiten Verzögerungsglied der Kette zugeordnet sind, und zum Bilden der Differenz dieser Summe und er Summe der Ausgangssignale der anderen ersten Überlagerungsschaltungen und zum dem Integrator Zuführen des Ausgangssignals der zweiten Überlagerungsschaltung.

In einer zweiten Weiterbildung der Erfindung ist vorgesehen, daß in der Kombinationsschaltung erste Überlagerungsschaltungen und diesen nachgeschaltete Integratoren angeordnet sind, die je einem der Verzögerungsglieder zugeordnet sind zum Bilden der Differenz des Eingangssignals des zugeordneten Verzögerungsgliedes und des Ausgangssignals dieses Verzögerungsgliedes und zum Integrieren der erhaltenen Differenz, und eine zweite Überlagerungsschaltung vorgesehen ist zum Bilden der Summe der Ausgangssignale der Integratoren, die jedem zweiten Verzögerungsglied der Kette zugeordnet sind, und zum Bilden der Differenz dieser Summe und der Summe der anderen Ausgangssignale.

Die beiden Weiterbildungen der Erfindung unterscheiden sich in der Ausführung der Kombinationsschaltung. Nach der Differenzbildung der ersten Überlagerungsschaltungen wird bei der ersten Weiterbildung zuerst summiert und dann integriert, während das bei der zweiten Weiterbildung umgekehrt ausgeführt wird.

Ist in der Periode des impulsförmigen Eingangssignals nur ein Impuls und ein impulsfreier Zeitabschnitt enthalten, so kann der Korrelator so ausgeführt werden, daß die Kette aus zwei Verzögerungsgliedern besteht.

Ein Einsatzgebiet des Korrelators ist die Fernsehsignalverarbeitung. Ist das Eingangssignal ein (z.B. von Rauschen überlagertes) Fernsehsignal und es sollen die in diesem Signal vorkommenden Horizontalimpulse detektiert werden, dann ist vorgesehen, daß das ein Verzögerungsglied zum Aufnehmen gerade der gesamten Abtastwerte des Horizontalimpulses des Fernsehsignals und das andere Verzögerungsglied zum Aufnehmen der gesamten Abtastwerte des impulsfreien Zeitabschnittes geeignet ist.

In einer anderen Weiterbildung der Erfindung ist vorgesehen, daß vor der Kette der Verzögerungsglieder eine nichtlineare Schaltung angeordnet ist, deren Übertragungsfaktor abhängig vor der Differenz des jeweiligen Abtastwertes und dem Abtastwert des Impulsdaches ist und bei einem größeren Betrag der Differenz kleiner ist. Weiterhin ist vorgesehen, daß vor der Kette der Verzögerungsglieder eine Begrenzerschaltung angeordnet ist. Durch die nichtlineare Schaltung und die Begrenzerschaltung werden die z.B. bei einem Videosignal eines Fernsehsignals auftretenden Weißanteile stark unterdrückt und der Impulsanteil vergrößert.

Anhand der Zeichnungen werden im folgenden Ausführungsbeispiele der Erfindung beschrieben. Es zeigt:
- Fig. 1: einen erfindungsgemäßen Korrelator mit einer ersten Ausführungsform der Kombinationsschaltung,
- Fig. 2: ein Diagramm zur Erläuterung einer in Fig. 1 dargestellten nichtlinearen Schaltung und einer Begrenzerschaltung,
- Fig. 3: (a) ein schematisch dargestellter Horizontalimpuls mit Videosignal eines Fernsehsignals (b) ein mögliches Korrelatorausgangssignal und
- Fig. 4: eine zweite Ausführungsform der Kombinationsschaltung.

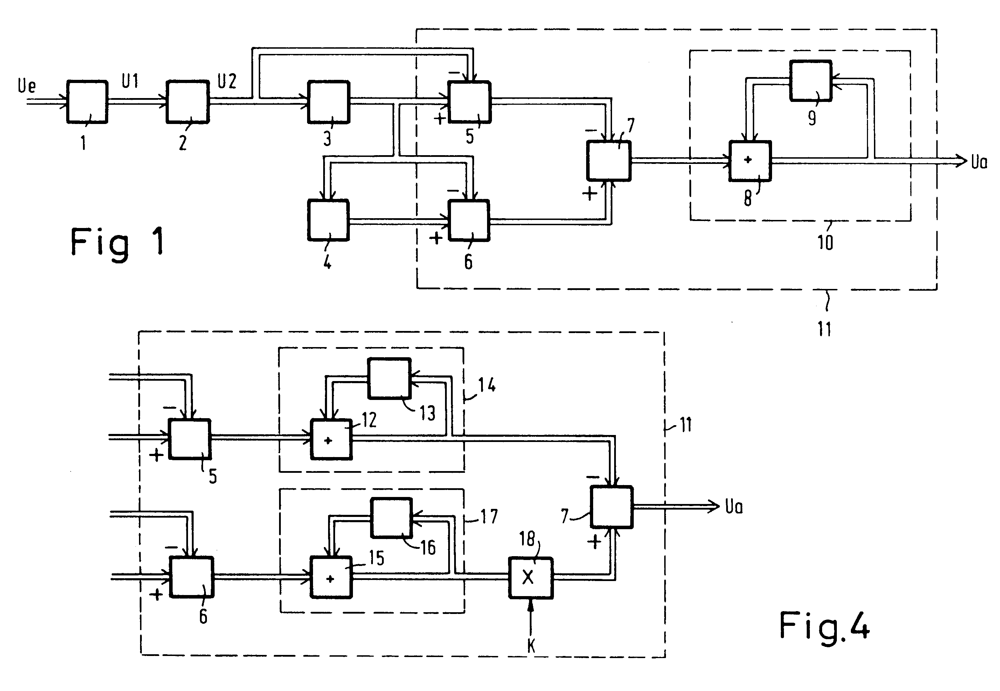

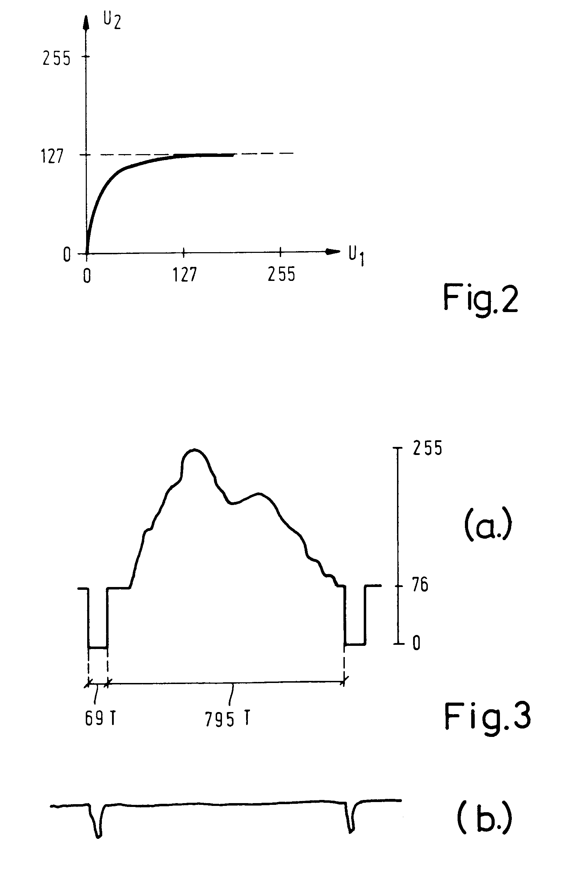

In Fig. 1 wird einer Begrenzerschaltung 1 ein impulsförmiges Eingangssignal, z.B. das als Folge binär codierter Abtastwerte vorliegende FBAS-Signal (Fernsehsignal), zugeführt. Wird das Eingangssignal mit z.B. 8 Bit aufgelöst, so entspricht der Weißanteil des Videosignals einem Wert von 255 und das Impulsdach des Horizontalimpulses einem Wert von Null. Der Schwarzanteil dieses Signals beginnt bei einem Wert von 76. Die Begrenzerschaltung 1 hält nun alle Abtastwerte des Eingangssignals, die einen Wert haben, der größer als 127 ist, auf diesem Wert. Das Ausgangssignal U1 der Begrenzerschaltung 1 wird einer nichtlinearen Schaltung 2 zugeführt. Mit dieser nichtlinearen Schaltung 2 wird der Restanteil des Videosignals stark unterdrückt und der Hub zwischen Horizontalimpulsdach und Schwarzwert vergrößert. In Fig. 2 ist das Ausgangssignal U2 der nichtlinearen Schaltung 2 als Funktion des Eingangssignals U1 dargestellt.

Das Ausgangssignal U2 wird einem Verzögerungsglied 3 und einer Kombinationsschaltung 11 zugeführt. Der Ausgang des Verzögerungsgliedes 3 ist mit der Kombinationsschaltung 11 und einem zweiten Verzögerungsglied 4 verbunden. Das Ausgangssignal des Verzögerungsgliedes 4 wird der Kombinationsschaltung 11 zugeführt. Ein Verzögerungsglied kann z.B. aus einer Schieberegisterschaltung bestehen oder aus Speicherschaltungen (RAM's), die als Schieberegister geschaltet sind. Wurde das digitale Fernsehsignal mit einer Abtastfrequenz von z.B. 13,5 MHz abgetastet, so entfallen auf den Horizontalimpuls 69 Abtastwerte und auf den impulsfreien Zeitabschnitt 795 Abtastwerte. Das Verzögerungsglied 3 ist so ausgelegt, daß es 69 Taktzyklen (69 T) verzögert und das Verzögerungsglied 4 so, daß es 795 Taktzyklen (795 T) verzögert. In Fig. 3a ist schematisch ein Horizontalimpuls und der folgende impulsfreie Zeitabschnitt dargestellt. Dieses Eingangssignal kann nun so von Rauschanteilen überlagert sein, daß nicht mehr erkannt wird, wann der Horizontalimpuls auftritt.

Das Ausgangssignal U2 der nichtlinearen Schaltung 2 wird vom Ausgangssignal des Verzögerungsgliedes 3 in einer Überlagerungsschaltung 5 subtrahiert, und das Ausgangssignal des Verzögerungsgliedes 3 wird vom Ausgangssignal des Verzögerungsgliedes 4 in einer Überlagerungsschaltung 6 subtrahiert. In der Überlagerungsschaltung 7 wird dann das Ausgangssignal der Überlagerungsschaltung 5 vom Ausgangssignal der Überlagerungsschaltung 6 subtrahiert. Der Ausgang der Überlagerungsschaltung 7 ist mit einem Integrator 10 verbunden, der eine Überlagerungsschaltung 8 und ein Verzögerungsglied 9 enthält, das jedes Signal um einen Takt verzögert. Das Eingangssignal des Integrators 10 ist auch gleichzeitig das Eingangssignal der Überlagerungsschaltung 8. Das Ausgangssignal der Überlagerungsschaltung 8 wird dem Verzögerungsglied 9 zugeführt. Das Ausgangssignal des Verzögerungsgliedes 9 bildet das zweite Eingangssignal der Überlagerungsschaltung 8. Die beiden Eingangssignale werden in der Überlagerungsschaltung 8 addiert und das Ergebnis dieser Addition ist das Ausgangssignal des Korrelators.

Damit der Horizontalimpuls im Rauschen detektiert werden kann, muß das Fernsehsignal mit einem geeigneten Mustersignal korreliert werden. Da der Abtastwert des Horizontalimpulses eines ungestörten Fernsehsignals negativer als das übrige Signal ist, wurde der Musterhorizontalimpuls auf +1 festgelegt und das übrige Mustersignal auf -1. Die Anzahl der Abtastwerte zwischen den Vorderflanken zweier Horizontalimpulse beträgt bei der Abtastfrequenz von 13,5 MHz 864 Abtastwerte. Der Horizontalimpuls besteht dann aus 69 Abtastwerten (der Dauer T) und die impulsfreie Zeit aus 795 Abtastwerten (der Dauer T), wie das aus Fig. 3a auch ersichtlich ist. Das bedeutet, daß die Korrelationsfunktion aus der Summe von 69 Abtastwerten mit positivem Vorzeichen und 795 Abtastwerten mit negativem Vorzeichen gebildet wird. Sind im Verzögerungsglied 3 nun alle Abtastwerte eines Horizontalimpulses und im Verzögerungsglied 4 alle Abtastwerte der impulsfreien Zeit gespeichert, so nimmt das Ausgangssignal Ua einen Minimalwert (Extremwert) an (Fig. 3b).

Die oben genannte Realisierung der Musterfunktion durch eine Vorzeichenfestsetzung wird durch die Überlagerungsschaltung 7 realisiert. Die Summation und Speicherung von 69 bzw. 795 Abtastwerten wird durch die Differenzbildung in den Überlagerungsschaltungen 5 und 6 und mit dem Integrator 10 realisiert. Wie aus Fig. 3b ersichtlich, nimmt das Ausgangssignal Ua einen Extremwert bei einem Impuls an. In dieser Ausführungsform ist der Extremwert ein Minimum, da in der Überlagerungsschaltung 7 das Ausgangssignal der Überlagerungsschaltung 5 vom Ausgangssignal der Überlagerungsschaltung 6 subtrahiert wird. Die Schaltung kann nun so verändert werden, daß bei dem Auftreten eines Impulses das Ausgangssignal Ua einen Maximalwert annimmt. Dazu muß nur in der Überlagerungsschaltung 7 das Ausgangssignal der Überlagerungsschaltung 6 vom Ausgangssignal der Überlagerungsschaltung 5 subtrahiert werden.

Die Begrenzerschaltung 1 und die nichtlineare Schaltung 2 sind nicht unbedingt für das Funktionieren des Korrelators erforderlich. In einem praktischen Schaltungsaufbau hat sich gezeigt, daß diese Kombination aus Begrenzerschaltung 1 und nichtlinearer Schaltung 2 die Detektion von verrauschten Horizontalimpulsen eines Fernsehsignals verbessern.

In Fig. 4 ist eine zweite Ausführungsform der Kombinationsschaltung 11 dargestellt. Die Schaltungselemente mit den gleichen Funktionen wie in Fig. 1 sind mit denselben Bezugszeichen versehen. Die Überlagerungsschaltung 5 bildet wie in Fig. 1 die Differenz zwischen dem Eingangssignal und dem Ausgangssignal des Verzögerungsgliedes 3 und die Überlagerungsschaltung 6 bildet die Differenz zwischen dem Eingangssignal und dem Ausgangssignal des Verzögerungsgliedes 4. Das Ausgangssignal der Überlagerungsschaltung 5 wird einem Integrator 14 zugeführt, der aus einer Überlagerungsschaltung 12 und einem Verzögerungsglied 13 besteht und der wie der in Fig. 1 beschriebene Integrator 10 aufgebaut ist. Auch der Ausgang der Überlagerungsschaltung 6 ist mit einem Integrator 17 verbunden, der auch eine Überlagerungsschaltung 15 und ein Verzögerungsglied 16 enthält. Das Ausgangssignal des wie der Integrator 10 aufgebauten Integrators 17 wird über einen Multiplizierer 18 der Überlagerungsschaltung 7 und ebenso das Ausgangssignal des Integrators 14 der Überlagerungsschaltung 7 zugeführt. Wie in Fig. 1 beschrieben, wird in der Überlagerungsschaltung 7 die Differenz zwischen diesen beiden Signalen gebildet. Das Ausgangssignal dieser Überlagerungsschaltung 7 ist das Ausgangssignal des Korrelators.

Im Gegensatz zur ersten Ausführungsform der Kombinationsschaltung wird hier jeweils nach den beiden Überlagerungsschaltungen 5 und 6 die Integration und anschließend die Überlagerung durchgeführt. Da die Wortbreite des Ausgangssignals des Integrators 17 sehr viel größer als die Wortbreite des Ausgangssignals des Integrators 14 ist, wird durch den Multiplizierer 18 das Ausgangssignal des Integrators 17 mit einem konstanten Faktor K (z.B. 69/795) multipliziert und so die Wortbreite und damit der Hardware-Aufwand vermindert. Der Multplizierer kann beispielsweise durch zwei Shiftschaltungen und eine Überlagerungsschaltung realisiert werden. Das binäre Ausgangssignal des Integrators 17 wird in einer Shiftschaltung um 4 Stellen und in einer dazu parallelen Shiftschaltung um 5 Stellen verschoben und die Ausgangssignale der beiden Shiftschaltungen anschließend addiert. Das Verhältnis von 69/795 wird in dieser Multipliziereranordnung durch 1/10,6 angenähert.

Die hier beschriebenen Ausführungsformen beschränken sich auf die Detektierung des Horizontalimpulses eines Fernsehsignals im Rauschen. Es kann jedoch die Schaltung so erweitert werden, daß auch das gesamte Synchronimpulsgemisch während eines Halbbildwechsels detektiert werden kann. Dazu müssen weitere Verzögerungsglieder dazugeschaltet werden und die Differenz zwischen dem Eingangs- und dem Ausgangssignal der Verzögerungsglieder gebildet werden und die Ergebnisse überlagert werden. Dabei ist das Ausgangssignal des letzten Verzögerungsgliedes das Eingangssignal des nächsten Verzögerungsgliedes. Die einzelnen Verzögerungszeiten entsprechen den Abtastwerten der Impulse bzw. der impulsfreien Zeitabschnitte.

## Patentansprüche

1. Korrelator mit einer Kette von mindestens zwei Verzögerungsgliedern (3,4), deren erstem Verzögerungsglied (3) ein Eingangssignal (Ue) zugeführt wird, das in periodischen Abständen Impulse enthält und als Folge digitaler Abtastwerte vorliegt, und mit einer Kombinationsschaltung (11) zum linearen Kombinieren des Eingangssignals des ersten Verzögerungsgliedes und der Ausgangssignale aller Verzögerungsglieder und zum Erzeugen eines bei einem Impuls einen Extremwert annehmenden Korrelatorausgangssignals (Ua), dadurch gekennzeichnet, daß jedes Verzögerungsglied (3,4) einem Impuls bzw. impulsfreien Zeitabschnitt zugeordnet ist, daß die Verzögerungsglieder in gleicher Weise aufeinanderfolgen, wie die Impulse bzw. impulsfreien Zeitabschnitte auftreten, daß alle bis auf höchstens ein am Anfang oder Ende der Kette liegendes Verzögerungsglied zum Aufnehmen gerade aller Abtastwerte des zugeordneten Impulses bzw. impulsfreien Zeitabschnittes geeignet sind, und daß die Kombinationsschaltung (11) zusätzlich mindestens einen Integrator (10;14,17) enthält zum Integrieren des linearkombinierten Signals.

2. Korrelator nach Anspruch 1, dadurch gekennzeichnet, daß in der Kombinationsschaltung (11) erste Überlagerungsschaltungen (5,6) angeordnet sind, die je einem der Verzögerungsglieder (3,4) zugeordnet sind zum jeweils Bilden der Differenz des Eingangssignals des zugeordneten Verzögerungsgliedes und des Ausgangssignals dieses Verzögerungsgliedes, und eine zweite Überlagerungsschaltung (7) vorgesehen ist zum Bilden der Summe der Ausgangssignale der ersten Überlagerungsschaltungen, die jedem zweiten Verzögerungsglied (4) der Kette zugeordnet sind, und zum Bilden der Differenz dieser Summe und der Summe der Ausgangssignale der anderen ersten Überlagerungsschaltungen und zum dem Integrator (10) Zuführen des Ausgangssignals der zweiten Überlagerungsschaltung.

3. Korrelator nach Anspruch 1, dadurch gekennzeichnet, daß in der Kombinationsschaltung (11) erste Überlagerungsschaltungen (5,6) und diesen nachgeschaltete Integratoren (14,17) angeordnet sind, die je einem der Verzögerungsglieder (3,4) zugeordnet sind zum Bilden der Differenz des Eingangssignals des zugeordneten Verzögerungsgliedes und des Ausgangssignals dieses Verzögerungsgliedes und zum Integrieren der erhaltenen Differenz, und eine zweite Überlagerungsschaltung (7) vorgesehen ist zum Bilden der Summe der Ausgangssignale der Integratoren, die jedem zweiten Verzögerungsglied (4) der Kette zugeordnet sind, und zum Bilden der Differenz dieser Summe und der Summe der anderen Ausgangssignale.

4. Korrelator nach Anspruch 2 oder 3, dadurch gekennzeichnet, daß zwischen wenigstens einer der ersten Überlagerungsschaltungen (5,6) und der zweiten Überlagerungsschaltung (7) ein Multiplizierer (18) angeordnet ist.

5. Korrelator nach einem der vorhergehenden Ansprüche, dadurch gekennzeichnet, daß die Kette aus zwei Verzögerungsgliedern (3,4) besteht.

6. Korrelator nach einem der vorhergehenden Ansprüche, dadurch gekennzeichnet, daß das Eingangssignal ein Fernsehsignal ist und daß das ein Verzögerungsglied (4) zum Aufnehmen gerade der gesamten Abtastwerte des Horizontalimpulses des Fernsehsignals und das andere Verzögerungsglied (3) zum Aufnhemen der gesamten Abtastwerte des impulsfreien Zeitabschnittes geeignet ist.

7. Korrelator nach einem der vorhergehenden Ansprüche, dadurch gekennzeichnet, daß vor der Kette der Verzögerungsglieder (3,4) eine nichtlineare Schaltung (2) angeordnet ist, deren Übertragungsfaktor abhängig von der Differenz des jeweiligen Abtastwertes und dem Abtastwert des Impulsdaches ist und bei einem größeren Betrag der Differenz kleiner ist.

8. Korrelator nach einem der vorhergehenden Ansprüche, dadurch gekennzeichnet, daß vor der Kette der Verzögerungsglieder (3,4) eine Begrenzerschaltung (1) angeordnet ist.

## Claims

1. A correlator comprising a chain of at least two delay members (3, 4), the first (3) of which receives an input signal (Ue) comprising pulses in periodical intervals and being present as a series of digital sampling values, and a combination circuit (11) for linearly combining the input signal of the first delay member and the output signals of all delay members and for generating at the occurrence of a pulse a correlator output signal (Ua) assuming an extreme value, characterized in that a pulse and a pulse-free interval, respectively, are associated with each delay member (3, 4), in that the delay members succeed each other in the same manner as the pulses and pulse-free intervals occur, in that all, but at most one delay member at the beginning or end of the chain are suitable for storing just all sampling values of the associated pulse or pulse-free interval, and in that the combination circuit (11) additionally comprises an integrator (10; 14, 17) for integrating the linearly combined signal.

2. A correlator as claimed in Claim 1, characterized in that the combination circuit (11) comprises first superposition circuits (5, 6) each associated with one of the delay members (3, 4) for forming the difference between the input signal of the associated delay member and the output signal of said delay member, a second superposition circuit (7) being provided for forming the sum of the output signals of the first superposition circuits associated with each second delay member (4) of the chain and for forming the difference between said sum and the sum of the output signals of the other first superposition circuits and for applying the output signal of the second superposition circuit to the integrator (10).

3. A correlator as claimed in Claim 1, characterized in that the combination circuit (11) comprises first superposition circuits (5, 6) succeeded by integrators (14, 17) each being associated with one of the delay members (3, 4) for forming the difference between the input signal of the associated delay member and the output signal of said delay member and for integrating the difference obtained, a second superposition circuit (7) being provided for forming the sum of the output signals of the integrators associated with each second delay member (4) of the chain and for forming the difference between said sum and the sum of the other output signals.

4. A correlator as claimed in Claim 2 or 3, characterized in that a multiplier (18) is arranged between at least one of the first superposition circuits (5, 6) and the second superposition circuit (7).

5. A correlator as claimed in any one of the preceding Claims, characterized in that the chain consists of two delay members (3, 4).

6. A correlator as claimed in any one of the preceding Claims, characterized in that the input signal is a television signal and in that one delay member (4) is suitable for storing just all the sampling values of the horizontal pulse of the television signal and the other delay member (3) is suitable for storing all the sampling values of the pulse-free interval.

7. A correlator as claimed in any one of the preceding Claims, characterized in that the chain of delay members (3, 4) is preceded by a non-linear circuit (2) whose transfer factor is dependent on the difference between each sampling value and the sampling value of the pulse top, the difference being smaller in the case of a higher value.

8. A correlator as claimed in any one of the preceding Claims, characterized in that the chain of delay members (3, 4) is preceded by a limiting circuit (1).

## Revendications

1. Corrélateur comportant une chaîne d'au moins deux éléments à retard (3, 4), dont le premier élément à retard (3) reçoit un signal d'entrée (Ue) comportant des impulsions à des intervalles périodiques et qui est disponible sous la forme d'une série de valeurs numériques d'échantillonnage, et un circuit combinateur (11) pour combiner de façon linéaire le signal d'entrée du premier élément à retard avec les signaux de sortie de tous les éléments à retard et pour engendrer un signal de sortie de corrélateur (Ua) prenant une valeur extrême lors de l'apparition d'une impulsion, caractérisé en ce que chaque élément à retard (3, 4) est associé à une impulsion ou à un intervalle sans impulsions, en ce que les éléments à retard se succèdent de la même manière que les impulsions ou les intervalles sans impulsions, en ce que tous les éléments à retard, sauf au plus un situé au début ou à la fin de la chaîne, conviennent pour stocker toutes les valeurs d'échantillonnage de l'impulsion ou de l'intervalle sans impulsions associés, et en ce que le circuit combinateur (11) comporte en outre au moins un intégrateur (10; 14, 17) pour intégrer le signal combiné de façon linéaire.

2. Corrélateur selon la revendication 1, caractérisé en ce que, dans le circuit combinateur (11), d'une part, sont disposés de premiers circuits de superposition (5, 6) associés chacun à un élément à retard (3, 4) pour former la différence entre le signal d'entrée de l'élément à retard associé et le signal de sortie de cet élément à retard et, d'autre part, est prévu un second circuit de superposition (7) pour former la somme des signaux de sortie des premiers circuits de superposition associés à chaque deuxième élément à retard (4) de la chaîne et pour former la différence entre cette somme et la somme des signaux de sortie des autres premiers circuits de superposition ainsi que pour appliquer à l'intégrateur (10) le signal de sortie du second circuit de superposition.

3. Corrélateur selon la revendication 1, caractérisé en ce que, dans le circuit combinateur (11), d'une part, sont disposés des premiers circuits de superposition (5, 6) et, en aval de ceux-ci, des intégrateurs (14, 17) associés chacun à l'un des éléments à retard (3, 4) pour former la différence entre le signal d'entrée de l'élément à retard associé et le signal de sortie de cet élément à retard et pour intégrer la différence obtenue et, d'autre part, est prévu un second circuit de superposition (7) pour former la somme des signaux de sortie des intégrateurs associés à chaque deuxième élément à retard (4) de la chaîne et pour former la différence entre cette somme et la somme des autres signaux de sortie.

4. Corrélateur selon la revendication 2 ou 3, caractérisé en ce qu'entre au moins l'un des premiers circuits de superposition (5, 6) et le second circuit de superposition (7), est disposé un multiplicateur (18).

5. Corrélateur selon l'une quelconque des revendications précédentes, caractérisé en ce que la chaîne est constituée par deux éléments à retard (3, 4).

6. Corrélateur selon l'une quelconque des revendications précédentes, caractérisé en ce que le signal d'entrée est un signal de télévision et en ce que l'un (4) des éléments à retard convient pour stocker la totalité des valeurs d'échantillonnage de l'impulsion horizontale du signal de télévision et l'autre élément à retard (3) convient pour stocker la totalité des valeurs d'échantillonnage de l'intervalle sans impulsions.

7. Corrélateur selon l'une quelconque des revendications précédentes, caractérisé en ce que, avant la chaîne d'éléments à retard (3, 4), est disposé un circuit non linéaire (2) dont le facteur de transfert est dépendant de la différence entre la valeur d'échantillonnage instantanée et la valeur d'échantillonnage du sommet d'impulsion, le facteur étant plus faible si différence est plus grande.

8. Corrélateur selon l'une des revendications précédentes, caractérisé en ce qu'avant la chaîne des éléments à retard (3, 4), est disposé un circuit limiteur (1).
